# EUROPÄISCHE PATENTSCHRIFT

(11) **EP 2 840 253 B1**
(45) Veröffentlichungstag und Bekanntmachung des Hinweises auf die Patenterteilung: **15.11.2017**
(21) Anmeldenummer: 14001307.9
(22) Anmeldetag: 10.04.2014
(51) Int. Cl.: F02N 11/08, B60R 16/03

(54) **Bordnetz für ein Kraftfahrzeug und Fahrzeug mit einem solchen Bordnetz**
On-board electrical system of a motor vehicle and vehicle with such an on-board electrical system
Réseau de bord pour un véhicule automobile et véhicule avec un tel réseau de bord

(30) Priorität: 24.08.2013 DE 102013014103
(43) Veröffentlichungstag der Anmeldung: 25.02.2015
(73) Patentinhaber: MAN Truck & Bus AG, 80995 München (DE)
(72) Erfinder: Fischer, Detlef, 81245 München (DE); Pfau, Stefan, 82377 Penzberg (DE); Lampalzer, Markus, 90537 Feucht (DE); Kerschl, Stefan, 85402 Kranzberg (DE); von Esebeck, Götz, 15831 Mahlow (DE)
(74) Vertreter: v. Bezold & Partner Patentanwälte - PartG mbB

(56) Entgegenhaltungen:
- WO-A1-02/066293
- DE-A1- 10 100 889
- DE-A1-102009 000 222
- DE-A1-102009 008 255
- DE-A1-102011 083 255

## Beschreibung

Die Erfindung betrifft ein Bordnetz für ein Kraftfahrzeug, insbesondere für ein Nutzfahrzeug. Die Erfindung betrifft weiterhin ein Fahrzeug mit einem solchen Bordnetz. Fahrzeuge müssen zunehmend hohe Anforderungen hinsichtlich der Reduktion des Kraftstoffverbrauchs und der Emissionen bei hohem Fahrkomfort erfüllen. Um dieses Ziel zu erreichen, ist es aus dem Stand der Technik bekannt, Fahrzeuge mit Start/Stopp- und Rekuperationssystemen auszurüsten. Bei derzeitigen Fahrzeugen werden die Rekuperationsmodule und Starter-Generatoren üblicherweise direkt an das Bordnetz angeschlossen. Dadurch ergeben sich Rückkopplungen auf das Bordnetz, wie beispielsweise Spannungseinbrüche beim Motorstart (Warm- und Kaltstart) oder Bordnetzwelligkeiten beim Rekuperieren, die durch einen angepassten Bordnetzspeicher abgemildert werden. Bei diesen Systemen entspricht die Spannungslage der Start/Stopp-Komponenten und des Energiespeichers der Bordnetzspannung.
Aus der Offenlegungsschrift DE 101 00 889 A1 ist ein Verfahren und eine Vorrichtung zur Realisierung eines Start/Stopp-Betriebes bei Fahrzeugen bekannt. Hierbei wird insbesondere ein Bordnetz für ein Kraftfahrzeug mit zwei Teilnetzen offenbart, die gemäß dem Oberbegriff des Anspruchs 1 über einen Gleichspannungswandler gekoppelt sind.
Eine Aufgabe der Erfindung ist es, ein Kraftfahrzeugbordnetz bereitzustellen, das Nachteile herkömmlicher Kraftfahrzeugbordnetze vermeidet. Das Kraftfahrzeugbordnetz soll insbesondere einen Start/Stopp-Betrieb ohne Spannungseinbrüche, ohne Bordnetzwelligkeiten beim Rekuperieren und ohne zusätzlichen Verschleiß ermöglichen. Eine weitere Aufgabe ist es, ein Verfahren zum Betrieb eines Bordnetzes bereitzustellen, das Nachteile herkömmlicher Verfahren vermeidet.
Diese Aufgaben werden durch ein Bordnetz und ein Verfahren mit den Merkmalen der unabhängigen Ansprüche gelöst. Vorteilhafte Ausführungsformen und Anwendungen der Erfindung sind Gegenstand der abhängigen Ansprüche und werden in der folgenden Beschreibung unter teilweiser Bezugnahme auf die Figuren näher erläutert.
Gemäß allgemeinen Gesichtspunkten der Erfindung zeichnet sich die erfindungsgemäße Bordnetztopologie dadurch aus, dass das erfindungsgemäße Bordnetz für ein Kraftfahrzeug zwei Teilnetze umfasst: Ein erstes Teilnetz, nachfolgend auch als Hauptnetz bezeichnet, in dem eine erste Nennspannung U1 anliegt, und ein zweites Teilnetz, nachfolgend auch als Inselnetz bezeichnet, in dem eine zweite Nennspannung U2 anliegt.

Das erste Teilnetz umfasst einen ersten Energiespeicher und einen Lastwiderstand, der durch wenigstens einen, vorzugsweise aber durch mehrere Verbraucher gebildet wird. Das zweite Teilnetz umfasst eine elektrische Maschine, die zum Starten eines Verbrennungsmotors des Kraftfahrzeugs und zum Generatorbetrieb bzw. Rekuperationsbetrieb ausgebildet ist. Das zweite Teilnetz umfasst ferner einen Energiespeicher, der mit der elektrischen Maschine incl. zugehöriger Elektronik verbunden und ausgebildet ist, die von der elektrischen Maschine in dem Generatorbetrieb bzw. Rekuperationsbetrieb erzeugte elektrische Ladung zu speichern.

Ferner umfasst das Bordnetz einen Spannungswandler, vorzugsweise einen DC/DC-Wandler, der das erste Teilnetz mit dem zweiten Teilnetz bidirektional verbindet und mindestens mittelbar mit dem ersten Energiespeicher und dem zweiten Energiespeicher verbunden ist. Hierbei ist der Spannungswandler ausgebildet, in Abhängigkeit eines Ladezustands des ersten Energiespeichers und/oder eines Ladezustands des zweiten Energiespeichers Energie über den Spannungswandler zwischen dem ersten und dem zweiten Teilnetz zu übertragen, beispielsweise zwischen den ersten und zweiten Energiespeichern oder von dem zweiten Energiespeicher zu dem Lastwiderstand im Hauptnetz.

Vorzugsweise ist die Nennspannung U2 größer als die Nennspannung U1. Beispielsweise kann die im zweiten Teilnetz anliegende Nennspannung 48 V betragen, während die Nennspannung im ersten Teilnetz die üblichen 24 V beträgt. Da die Spannungslage des zweiten Teilnetzes erhöht werden kann, beispielsweise auf 48 V, ist es energetisch vorteilhaft, weitere leistungsstarke Nebenverbraucher in das zweite Teilnetz zu integrieren.

Durch das Vorsehen des zweiten Teilnetzes wird somit ein von der Bordnetzspannung im Hauptnetz bzw. ersten Teilnetz unabhängiges Inselnetz bereitgestellt, das von diesem durch einen Spannungswandler getrennt ist. Die erfindungsgemäße Bordnetztopologie entkoppelt somit das Start/Stopp-System und den Rekuperationsspeicher vom Hauptnetz. Dadurch können durch den Rekuperations- und/oder den Start/Stopp-Mechanismus bedingte Störeinflüsse, wie Spannungseinbrüche beim Motorstart oder Bordnetzwelligkeiten beim Rekuperieren, im Hauptnetz zuverlässig vermieden werden, da diese auf das zweite Teilnetz beschränkt bleiben. Der Spannungswandler ist vorzugsweise mit einer Leistungselektronik versehen, die bei Rekuperations- und Start/Stopp-Vorgängen des Fahrzeugs auftretende Spannungseinbrüche und Bordnetzwelligkeiten herausfiltert und nicht an das erste Teilnetz weitergibt. Dadurch kann auch einer vorzeitigen Alterung des im ersten Teilnetz befindlichen Energiespeichers vorgebeugt werden.

Somit sind die Komponenten für den Start/Stopp-Betrieb und die Rekuperation unabhängig von der Bordnetzspannung U1 und folglich nicht durch eine Maximalleistung der Bordnetzspannung U1 beschränkt. Da die Rekuperation innerhalb des zweiten Teilnetzes erfolgt, ist diese auch unabhängig vom Wirkungsgrad des Spannungswandlers, da die rekuperierte Energie direkt im zweiten Teilnetz durch den zweiten Energiespeicher aufgenommen werden kann und nicht durch den Spannungswandler hindurchgeleitet werden muss.

Für den Start des Verbrennungsmotors, insbesondere für den Kaltstart, kann weiterhin ein konventioneller Starter vorgesehen sein. Für eine verbesserte Lebensdauer der Batterie ist der Starter vorzugsweise im zweiten Teilnetz vorgesehen. Dies hat ferner den Vorteil, dass Länge und Querschnitt von entsprechenden Anschlusskabeln reduziert werden können. So kann beispielsweise im zweiten Teilnetz eine höhere Spannung eingesetzt werden, die geringere Starterströme zum Erbringen der Starterleistung erfordert und es somit ermöglicht, den Querschnitt der entsprechenden Kabel zu reduzieren. Ein weiterer Vorteil der Anordnung des konventionellen Starters im zweiten Teilnetz ist, dass eine bessere Kaltstartfähigkeit erzielt wird und beim Start im Hauptnetz kein oder nur ein geringer Spannungseinbruch auftritt. Ferner hat dies eine geringere Alterung des ersten Speichers im Hauptnetz zur Folge und ermöglicht eine geringere Abhängigkeit von der Lebensdauer des ersten Speichers. Der Starter kann jedoch auch im ersten Teilnetz angeordnet sein.

Gemäß einer vorteilhaften Ausführungsform ist das Bordnetz so ausgebildet, dass die elektrische Maschine den Starter beim Startvorgang unterstützt, indem Starter und elektrische Maschine gleichzeitig zum Kaltstartvorgang ihr Moment in den Verbrennungsmotor einprägen. Eine weitere Möglichkeit zur Kaltstart-Unterstützung wäre, wenn der Starter im ersten Teilnetz unterstützend durch den DC/DC-Wandler aus dem zweiten Teilnetz mit Energie versorgt wird, zusätzlich zur Leistungsbereitstellung aus Netz U1.

Gemäß einem bevorzugten Ausführungsbeispiel ist im ersten Teilnetz ein Sensor zur Überwachung des Ladezustands des ersten Energiespeichers vorgesehen. Dies ermöglicht eine genaue Erfassung des Ladezustands des ersten Speichers unabhängig von Bordnetzwelligkeiten und anderen Störeffekten. Alternativ kann auch der Spannungswandler eingerichtet sein, den Ladungszustand des ersten Speichers in Abhängigkeit der am Spannungswandler anliegenden Spannung zu erfassen, die an diesem an der dem ersten Teilnetz zugewandten Seite anliegt. Zur genauen Bestimmung des Ladungszustandes dieses Speichers muss die Speicherleerlaufspannung gemessen werden.

Der in dem zweiten Teilnetz vorzugsweise verwendete Speicher, wie beispielsweise ein Doppelschichtkondensator, ist in der Regel mit einem eigenen Speichermanagementsystem ausgestattet, das einen genauen Wert für den Ladungszustand des zweiten Energiespeichers fortlaufend ermittelt. Alternativ kann jedoch auch der Spannungswandler ausgebildet sein, den Ladungszustand des zweiten Speichers aus einer am Spannungswandler anliegenden Spannung zu erfassen. Hierbei wird die Spannung, die an der dem zweiten Teilnetz zugewandten Seite am Spannungswandler anliegt, zu einem Zeitpunkt erfasst, wenn die elektrische Maschine das zweite Teilnetz nicht belastet, z. B. beim Stand des Fahrzeugs.

Gemäß der Erfindung enthält der Spannungswandler eine zentrale Steuerung und n parallel geschaltete, als Spannungswandler ausgebildete Subkomponenten, die nachfolgend auch als Phasen bezeichnet werden, wobei n ≥ 1 ist. Weiter vorzugsweise ist n ≥ 2, weiter vorzugsweise ≥ 5. Dies verbessert die Ausfallsicherheit und die Verfügbarkeit des Bordnetzes. So können gemäß der Erfindung einzelne Subkomponenten durch die Steuerung zu- oder abgeschaltet werden, falls eine Fehlfunktion in einer dieser Komponenten vorliegt oder um einen Kurzschluss zwischen dem ersten Teilnetz und dem zweiten Teilnetz oder einen Kurzschluss zwischen dem ersten Teilnetz und Masse oder einen Kurzschluss zwischen dem zweiten Teilnetz und Masse zu vermeiden.
Ein besonderer Vorzug dieser Ausführungsform liegt ferner darin, dass die Steuerung ausgebildet sein kann, in Abhängigkeit einer an dem Spannungswandler anliegenden Last einzelne Subkomponenten zu- oder abzuschalten. Hierdurch kann der Spannungswandler an unterschiedliche Leistungsanforderungen für den Energietransfer von dem ersten Teilnetz in das zweite Teilnetz und umgekehrt dynamisch angepasst werden.
Eine Möglichkeit der erfindungsgemäßen Realisierung sieht hierbei vor, dass zumindest eine oder vorzugsweise jede der Subkomponenten mindestens eine U/I-Messeinrichtung aufweist, um eine Spannung und/oder einen Strom der Subkomponente zu bestimmen. Besonders vorteilhaft ist, wenn jede Subkomponente zwei derartige U/I-Messeinrichtungen aufweist: eine eingangsseitig angeordnete U/I-Messeinrichtung, d. h. stromauf des Spannungswandlerelements der Subkomponente und eine ausgangsseitig angeordnete U/I-Messeinrichtung, d. h. stromab des Spannungswandlerelements der Subkomponente.

Gemäß einer weiteren Variante kann eine weitere U/I-Messeinrichtung vorgesehen sein, um eine Spannung und/oder einen Strom an einem Netzknoten des Spannungswandlers zu dem ersten und/oder dem zweiten Teilnetz zu bestimmen. Besonders vorteilhaft ist es, wenn an beiden Netzknoten, d. h. an dem Knoten zum ersten Teilnetz und an dem Knoten zum zweiten Teilnetz, jeweils eine U/I-Messvorrichtung vorgesehen ist.

Durch die funktionelle Unabhängigkeit der einzelnen Subkomponenten bzw. Phasen kann eine derartige Messung der anliegenden Spannung oder des fließenden Stroms in den Subkomponenten oder an den Knoten verwendet werden, um das anliegende Last-Szenario durch die Steuerung des Spannungswandlers zu ermitteln, um so bei Bedarf einzelne Phasen zu- oder abzuschalten. Dadurch ergibt sich die Möglichkeit, in Abgleich mit vorher ermittelten Wirkungsgradkennfeldern den Systemverbund zentral gesteuert im besten Wirkungsgradbereich zu betreiben. Des Weiteren kann bei einem Ausfall/Fehler einer Subkomponente die Gesamtleistung zwar nicht mehr dargestellt werden, aber eine reduzierte Leistungsfähigkeit bleibt dennoch erhalten, um so eine verbesserte Ausfallsicherheit zu realisieren.

Eine weitere Möglichkeit der erfindungsgemäßen Realisierung sieht vor, dass mindestens eine der Subkomponenten unidirektional ausgebildet ist. Auf diese Weise kann auf konstruktiv einfache Weise eine unterschiedliche Leistungsfähigkeit des Spannungswandlers zum Übertragen von Leistung vom ersten ins zweite Teilnetz versus der Leistungsfähigkeit zur Übertragung von Leistung vom zweiten ins erste Teilnetz umgesetzt werden. Vorzugsweise ist der Spannungswandler gemäß dieser Variante so ausgelegt, dass die Leistungsfähigkeit vom ersten ins zweite Teilnetz größer ist als die Leistungsfähigkeit vom zweiten ins erste Teilnetz.

Die zuvor beschriebenen Ausführungsvarianten können durch einen Spannungswandler, der als ein Gerät bzw. als bauliche Einheit ausgebildet ist oder durch entsprechend verschaltete Einzelgeräte realisiert werden.

Der erste Energiespeicher kann als ein herkömmlicher Bleiakkumulator, als ein Lithiumionen-akkumulator oder auch als ein Kondensatorspeicher ausgebildet sein. Der zweite Energiespeicher ist vorzugsweise ein Doppelschichtkondensator (EDLC-Speicher), ein Superkondensator oder ein Lithiumionen-Akkumulator.

Gemäß einem bevorzugten Ausführungsbeispiel ist das Bordnetz ausgebildet, Energie aus dem ersten Energiespeicher über den Spannungswandler in den zweiten Energiespeicher zu übertragen. Vorzugsweise wird auf diese Weise Energie aus dem ersten Energiespeicher in den zweiten Energiespeicher über den Spannungswandler übertragen, wenn ein Ladezustand in dem zweiten Energiespeicher einen ersten vorbestimmten Schwellwert unterschreitet. Dadurch kann sichergestellt werden, dass stets genügend Energie im zweiten Speicher vorrätig ist, um das erste Teilnetz bzw. die darin befindlichen Verbraucher auch im Stand bei ausgeschaltetem Verbrennungsmotor zu versorgen. Ferner wird sichergestellt, dass im zweiten Speicher genügend Energie vorrätig ist, um einen Warmstart mit der elektrischen Maschine durchzuführen.

Bei einer vorteilhaften Variante dieser Ausgestaltungsform wird ferner vom Bordnetz geprüft, ob der Ladungszustand des ersten Energiespeichers unter einen zweiten vorbestimmten Wert gefallen ist. Gemäß dieser Ausführungsform wird nur Energie in den zweiten Energiespeicher übertragen, wenn der Ladezustand in dem ersten Energiespeicher noch nicht unter den zweiten vorbestimmten Wert gefallen ist. Wenn der Ladungszustand des ersten Energiespeichers unter den zweiten vorbestimmten Wert gefallen ist, kann stattdessen ein Motorstart, beispielsweise im Leerlauf, erzwungen werden, um ein zu starkes Entladen der Energiespeicher zu verhindern. Die beschriebene Ausführungsvarianten ermöglichen somit eine längere Stoppdauer des Fahrzeugs, bevor ein Motorstart erzwungen wird.

Eine weitere vorteilhafte Ausführungsvariante sieht vor, Energie vom ersten Energiespeicher über den Spannungswandler in den zweiten Energiespeicher zu übertragen, wenn ermittelt wird, dass der erste Energiespeicher nicht mehr in der Lage ist, ausreichend Leistung für den Start des Verbrennungsmotors zu liefern. Dies kann z. B. der Fall bei einem gealterten leistungsschwachen ersten Speicher sein, der nicht mehr in der Lage ist, die für einen Startvorgang kurzfristig hohe Startleistung, beispielsweise 12 kW, bereitzustellen. Mittels der erfindungsgemäßen Bordnetztopologie kann die Restladung im ersten Speicher mit geringerer Leistung über einen längeren Zeitraum entnommen und über den Spannungswandler an den zweiten Energiespeicher übertragen werden. Auf diese Weise kann selbst bei starker Entladung beider Energiespeicher somit verbleibende Restladung gebündelt werden, um ein Starten des Motors zu ermöglichen, die dann über den elektrischen Motor im zweiten Teilnetz erfolgt.

Gemäß einer weiteren Variante ist das Bordnetz ausgebildet, in dem zweiten Energiespeicher nicht aufnehmbare, rekuperierte Energie von dem Spannungswandler in das erste Teilnetz zu übertragen. Dadurch kann die Energieeffizienz des Fahrzeugs verbessert werden, da vermieden wird, dass die Energie, die beim Abbremsen der Fahrzeugs entsteht, bei vollgeladenem zweiten Energiespeicher mittels der Bremsen des Fahrzeugs oder des Antriebsmotors in Verlustwärme umgesetzt wird.

Vorzugsweise ist das Bordnetz weiter ausgebildet, während des Fahrbetriebs im zweiten Speicher gespeicherte Energie zur Versorgung des ersten Lastwiderstands an das erste Teilnetz zu übertragen. Insbesondere beim Stopp des Fahrzeugs kann die verwendete rekuperierte Energie des zweiten Energiespeichers zur Versorgung der Verbraucher im ersten Teilnetz vorteilhaft eingesetzt werden. Dadurch kann wirksam ein vorzeitiges Altern des Energiespeichers im ersten Teilnetz verhindert werden.

Bei einer weiteren vorteilhaften Ausführungsform ist das Bordnetz ausgebildet, mittels des Spannungswandlers eine Ist-Spannung im ersten Teilnetz auf eine vorgegebene Kennlinie einzuregeln. Dies hat den Vorteil, dass z. B. der erste Speicher mit idealer Ladeschlussspannung betrieben werden kann. Ein derartiger Speicher wird abhängig von der Temperatur mit einer bestimmten Spannung geladen, wobei dieser erst strombegrenzt und anschließend in der letzten Ladephase spannungsbegrenzt angefahren wird. Die erfindungsgemäße Bordnetztopologie ermöglicht es, die vorgegebene Kennlinie durch den Spannungswandler entsprechend angesteuert anzufahren, der hierbei Energie aus dem zweiten Teilnetz ins erste Teilnetz transferiert.

Das Bordnetz umfasst vorzugsweise eine Steuereinheit zur Steuerung der Komponenten des Bordnetzes, beispielsweise zur Steuerung des Bordnetzes gemäß den vorgenannten Ausführungsbeispielen. Die Steuereinheit ist mit den einzelnen Komponenten des ersten und zweiten Bordnetzes über Signalleitungen verbunden. Insbesondere empfängt die Steuereinheit über derartige Signalleitungen einen aktuellen Wert betreffend den Ladungszustand des ersten Energiespeichers und einen entsprechenden Wert betreffend den Ladungszustand des zweiten Energiespeichers. Die Steuereinheit ist vorzugsweise ausgebildet, in Abhängigkeit der empfangenen Werte über die Ladungszustände der Energiespeicher den Spannungswandler so anzusteuern, dass mittels des Spannungswandlers Energie zwischen den beiden Teilnetzen je nach Bedarf, wie vorstehend beschrieben, ausgetauscht werden kann. Insbesondere wird der Spannungswandler so angesteuert, dass dieser Energie aus dem ersten Energiespeicher in den zweiten Energiespeicher übertragen kann und umgekehrt.

Ein weiterer Aspekt der vorliegenden Erfindung betrifft ein Fahrzeug, insbesondere ein Nutzfahrzeug mit einem Bordnetz nach einem der vorstehend beschriebenen Aspekte.

Weitere Einzelheiten und Vorteile der Erfindung werden im Folgenden unter Bezug auf die beigefügten Zeichnungen beschrieben. Es zeigen:
- Figur 1: schematisch ein Beispiel für ein Bordnetz eines Kraftfahrzeugs;
- Figur 2: schematisch ein weiteres Beispiel für ein Bordnetz eines Kraftfahrzeugs; und
- Figur 3: ein schematisches Blockschaltbild für einen Spannungswandler zur Verwendung in einem Bordnetz gemäß dem Ausführungsbeispiel der Erfindung.

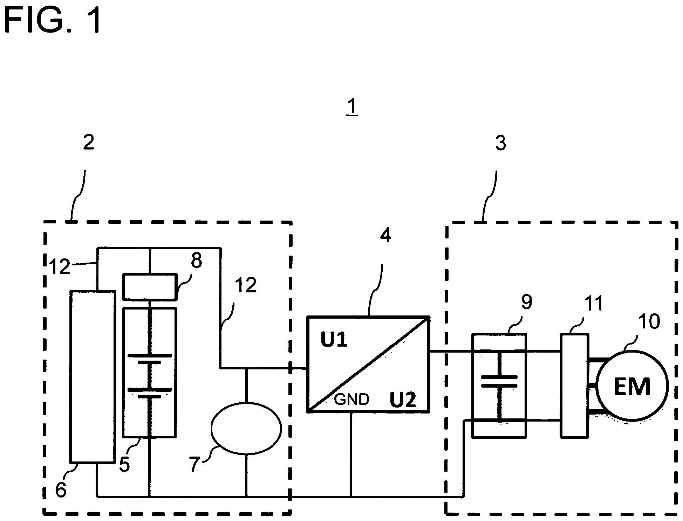

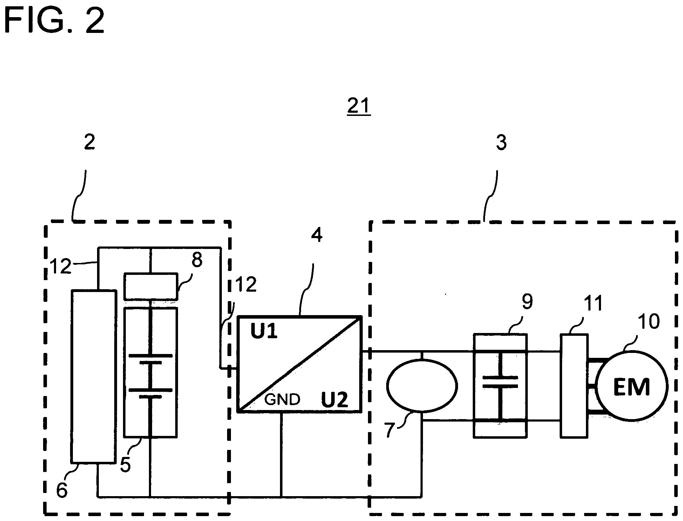

Figur 1 zeigt schematisch ein Beispiel für ein Bordnetz 1 eines Fahrzeugs, insbesondere eines Nutzfahrzeugs. Das Bordnetz 1 weist zwei Teilnetze 2, 3 auf:
Ein erstes Teilnetz 2, in dem eine erste Netzspannung U1 anliegt, und das einen ersten Energiespeicher 5 und einen Lastwiderstand 6 umfasst. Der Lastwiderstand 6 ist durch wenigstens einen, vorzugsweise durch mehrere Verbraucher gebildet. Im ersten Teilnetz 2 ist ferner ein konventioneller Starter 7 für den Verbrennungsmotor vorgesehen. Ferner weist das erste Teilnetz 2 einen Sensor 8 zur Überwachung des Ladezustands des ersten Energiespeichers 5 auf.
Ferner ein zweites Teilnetz 3, in dem eine zweite Netzspannung U2 anliegt und in dem eine elektrische Maschine 10 vorgesehen ist. Die elektrische Maschine 10 ist zum Starten eines Verbrennungsmotors (nicht gezeigt) des Kraftfahrzeugs und zum Generatorbetrieb bzw. Rekuperationsbetrieb ausgebildet. Im zweiten Teilnetz 3 ist ferner ein zweiter Energiespeicher 9 vorgesehen, der mit der elektrischen Maschine 10 über einen Inverter 11 verbunden ist. Der zweite Energiespeicher 9 ist ausgebildet, von der elektrischen Maschine 10 in dem Generatorbetrieb bzw. Rekuperationsbetrieb erzeugte elektrische Ladung zu speichern. Der Energiespeicher 9 ist als Doppelschichtkondensator ausgebildet. Im vorliegenden Beispiel ist der erste Energiespeicher 5 ebenfalls als Kondensatorspeicher ausgebildet. Die Stromleitungen 12 sind in Figur 1 mit durchgezogenen schwarzen Linien gekennzeichnet.
Das Bordnetz 1 umfasst ferner einen Spannungswandler 4, der das erste Teilnetz 2 mit dem zweiten Teilnetz 3 bidirektional verbindet. Der Spannungswandler 4 ist ausgebildet, eine Gleichspannung aus einem der Teilnetze 2, 3, beispielsweise eine Gleichspannung, mit der das erste Teilnetz 2 betrieben wird, zu empfangen und eine Ausgangsspannung zu erzeugen, welche von der eingangsseitig empfangen Spannung verschieden ist.
Der Starter 7 für den Verbrennungsmotor kann jedoch auch im zweiten Teilnetz 3, dem Inselnetz, vorgesehen sein. Dies ist in dem Beispiel eines Bordnetzes 21 der Figur 2 illustriert, das sich von dem in Figur 1 illustrierten Beispiel dadurch unterscheidet, dass der Starter 7 in dem zweiten Teilnetz 3 angeordnet ist.
Das Bordnetz 1 bzw. 21 kann ferner eine Steuereinheit (nicht gezeigt) umfassen, die über entsprechende Signalleitungen (nicht gezeigt) mit den entsprechenden Komponenten des Bordnetzes 1, 21 verbunden ist, insbesondere dem Spannungswandler 4, dem Ladungssensor 8, den Energiespeichern 5 und 9 sowie der elektrischen Maschine 10.
Die Steuereinheit empfängt von den Energiespeichern 5, 9 bzw. dem Ladungszustandssensor 8 und von einem Speichermanagementsystem (nicht gezeigt) des Energiespeichers 9 Daten über den Ladungszustand der Energiespeicher 5, 9. Die Steuereinheit ist ferner ausgebildet, an den Spannungswandler 4 in Abhängigkeit der empfangenen Ladungszustände entsprechende Steuersignale auszugeben. In Abhängigkeit der von der Steuereinheit empfangenen Steuersignale ist der Spannungswandler 4 eingerichtet, Energie von ersten Teilnetz 2 in das zweite Teilnetz 3 zu übertragen und umgekehrt. Über den Spannungswandler kann auf diese Weise insbesondere Energie vom ersten Energiespeicher 5 zu dem zweiten Energiespeicher 9 übertragen werden und umgekehrt.

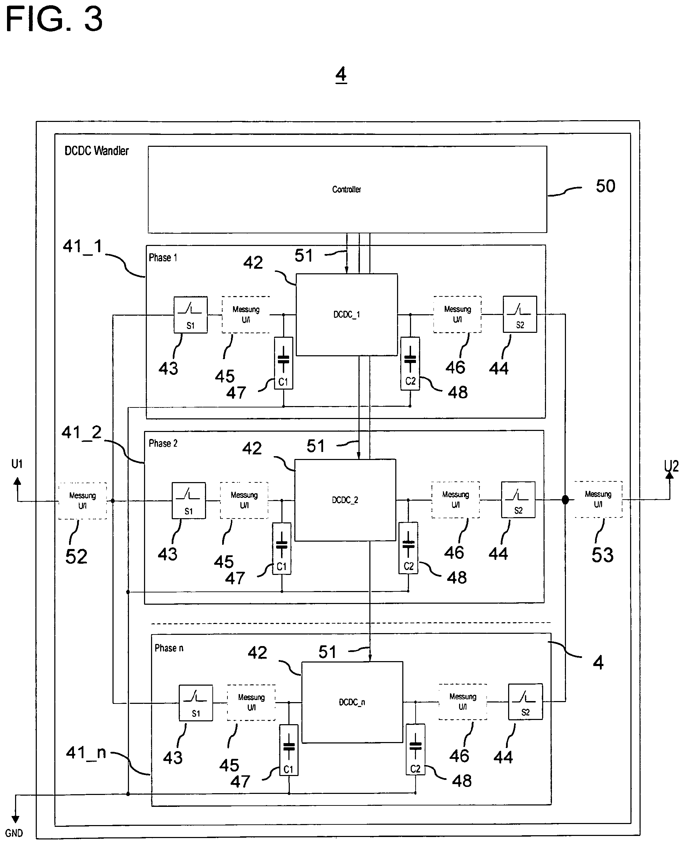

Figur 3 zeigt das erfindungsgemäße Ausführungsbeispiel für den Spannungswandler 4. Der Spannungswandler ist als DC/DC-Wandler ausgebildet und enthält einen zentralen Controller 50.

Der Spannungswandler enthält ferner parallel geschaltete Subkomponenten 41, in Figur 3 auch als Phasen bezeichnet, welche in Zusammenwirkung die Gesamtspannungswandlerfunktion des Spannungswandlers 4 darstellen. Jede der einzelnen Phasen 41_1 bis 41_n besteht aus einem zentralen Spannungswandlerelement 42, einem eingangsseitigen Schalter 43 und einem ausgangsseitigen Schalter 44. Mit dem Schalter 43 kann die jeweilige Subkomponente 41 im Falle einer Fehlfunktion in der Subkomponente 41 oder eines Kurzschlusses vom ersten Teilnetz 2 getrennt werden. Entsprechend kann mit dem zweiten Schalter 44 die Subkomponente 41 vom zweiten Teilnetz 3 getrennt werden.

Zwischen den Schaltern 43, 44 und dem Spannungswandlerelement 42 sind jeweils Messelemente 45, 46 angeordnet, um den Strom und die Spannung in dem jeweiligen Subelement 41 zu messen. Des Weiteren sind stromauf und stromab des Spannungswandlerelements 42 Kondensatoren 47, 48 vorgesehen, die jeweils als Zwischenspeicher dienen, um Spannungsspitzen zu dämpfen und um eine Spannungswelligkeit zu kompensieren. Der Spannungswandler 4 weist ferner zwei U/I-Messeinrichtungen 52, 53 auf, um eine Spannung und den Strom an den Netzknoten des Spannungswandlers 4 zu dem ersten und dem zweiten Teilnetz 2, 3 zu bestimmen.

Jedes der Spannungswandlerelemente 42 weist auch einen Eingang für ein Eingangssignal 51 des Controllers 50 auf, über das der Controller 50 das jeweilige Spannungswandlerelement 42 steuert. Die Schalter 43, 44 und die Messeinrichtungen 45, 46, 52, 53 sind ebenfalls über Signalleitungen (nicht eingezeichnet) mit dem Controller 50 verbunden. Anhand der empfangenen Messwerte der Messeinrichtungen 45, 46, 52, 53 betreffend den Strom und/oder die Spannung in den Phasen 41 oder an den Netzknoten kann der Controller 50 die aktuelle Last am Spannungswandler 4 bzw. an den einzelnen Phasen 41 ermitteln und/oder bestimmen, ob ein Fehlerfall in einer der Phasen 41 vorliegt.

Im Fehlerfall innerhalb einer Phase kann durch die Schalter 43 und 44 die entsprechende Phase durch den Controller 50 vom ersten Teilnetz 2 und/oder vom zweiten Teilnetz 3 getrennt werden. Dadurch wird verhindert, dass es im Fehlerfall des DC/DC-Wandlers 4 zu einem Kurzschluss zwischen dem ersten Teilnetz 2 und dem zweiten Teilnetz 3, einem Kurzschluss zwischen dem ersten Teilnetz 2 und Masse (GND) oder einem Kurzschluss zwischen dem zweiten Teilnetz 3 und Masse (GND) kommt.

Durch die funktionelle Unabhängigkeit der einzelnen Phasen kann über die Ermittlung der Messwerte für Strom und Spannung (ermittelt wahlweise über die Messung U/I in den Phasen 41 oder an den Netzknoten durch die Messeinheiten 52, 53) durch den Controller 50 das anliegende Lastszenario ermittelt werden, so dass dieser bei Bedarf einzelne Phasen über die Signalleitungen 51 zu- oder abschalten kann. Dadurch ergibt sich die Möglichkeit, im Abgleich mit vorher ermittelten Wirkungsgradkennfelder, den Systemverbund zentralgesteuert durch den Controller 50 im besten Wirkungsgradbereich zu betreiben. Des Weiteren kann bei Ausfall/Fehlern einer Phase 41 die Gesamtleistung nicht mehr dargestellt werden, jedoch bleibt eine reduzierte Leistungsfähigkeit erhalten. Dadurch wird sichergestellt, dass der DC/DC-Wandler 4 über sein gesamtes Leistungsspektrum einen hohen Wirkungsgrad aufweist. Dies ist speziell in Stadtbussen von Bedeutung, bei denen das Leistungsspektrum des Bordnetzes sehr breit und die Verteilung der abgerufenen Leistungen sehr gleichmäßig ist.

Obwohl die Erfindung unter Bezugnahme auf das Ausführungsbeispiel beschrieben worden ist, ist es für einen Fachmann ersichtlich, das verschiedene Änderungen ausgeführt werden können und Äquivalente als Ersatz verwendet werden können, ohne den Bereich der Erfindung zu verlassen. Zusätzlich können viele Modifikationen ausgeführt werden, um eine bestimmte konstruktive Ausführung des Bornetzes (Art und Anzahl der Verbraucher und deren Anordnung im ersten oder zweiten Teilnetz etc.) an die Lehre der Erfindung anzupassen, ohne den zugehörigen Bereich zu verlassen. Folglich soll die Erfindung nicht auf das offenbarte bestimmte Ausführungsbeispiel begrenzt sein, sondern die Erfindung soll alle Ausführungsbeispiele umfassen, die in den Bereich der beigefügten Patentansprüche fallen.

### Bezugszeichenliste

- 1,21: Bordnetz
- 2: erstes Teilnetz
- 3: zweites Teilnetz
- 4: Spannungswandler
- 5: erster Energiespeicher
- 6: Lastwiderstand
- 7: Starter
- 8: Sensor
- 9: zweiter Energiespeicher
- 10: elektrische Maschine
- 11: Inverter
- 12: Stromleitungen
- 41: Subkomponenten, Phasen
- 42: Spannungswandlerelement
- 43, 44: Schalter
- 45, 46: Messeinrichtung
- 47, 48: Kondensator
- 50: Controller
- 51: Signalleitung
- 52, 53: Messeinrichtung
- U1, U2: Nennspannung

## Patentansprüche

1. Bordnetz für ein Kraftfahrzeug, insbesondere für ein Nutzfahrzeug, mit
einem ersten Teilnetz (2), in dem eine erste Nennspannung (U1) anliegt, umfassend einen ersten Energiespeicher (5) und einen ersten, durch mehrere Verbraucher gebildeten, Lastwiderstand (6);
einem zweiten Teilnetz (3), in dem eine zweite Nennspannung (U2) anliegt, umfassend eine elektrischen Maschine (10), die zum Starten eines Verbrennungsmotors des Kraftfahrzeugs und zum Generatorbetrieb bzw. Rekuperationsbetrieb ausgebildet ist, einen zweiten Energiespeicher (9), der mit der elektrischen Maschine (10) verbunden und ausgebildet ist, von der elektrischen Maschine (10) in dem Generatorbetrieb bzw. Rekuperationsbetrieb erzeugte elektrische Ladung zu speichern; und
einem Spannungswandler (4), der das erste Teilnetz (2) mit dem zweiten Teilnetz (3) bidirektional verbindet und mindestens mittelbar mit dem ersten Energiespeicher (5) und dem zweiten Energiespeicher (9) verbunden ist, wobei der Spannungswandler (4) ausgebildet ist, in Abhängigkeit eines Ladezustands des ersten Energiespeichers (5) und/oder eines Ladezustands des zweiten Energiespeichers (9) Energie über den Spannungswandler (12) zwischen dem ersten (2) und zweiten (3) Teilnetz zu übertragen;
wobei der Spannungswandler (4) eine Steuereinheit (50) und n parallel geschaltete, als Spannungswandler ausgebildete Subkomponenten (41) umfasst, wobei n≥1 ist; **dadurch gekennzeichnet,**
**dass** die Subkomponenten (41) jeweils einen ersten Schalter (43) aufweisen, um die Subkomponente (41) vom ersten Teilnetz (2) zu trennen und/oder einen zweiten Schalter (44) aufweisen, um die Subkomponente (41) vom zweiten Teilnetz (3) zu trennen.

2. Bordnetz nach Anspruch 1, **dadurch gekennzeichnet, dass** das erste Teilnetz (2) oder das zweite Teilnetz (3) einen Starter (7) für den Verbrennungsmotor umfasst.

3. Bordnetz nach Anspruch 1 oder 2, **dadurch gekennzeichnet, dass** das erste Teilnetz (2) einen Sensor (8) zur Überwachung des Ladezustands des ersten Energiespeichers (5) aufweist.

4. Bordnetz nach einem der vorhergehenden Ansprüche, **dadurch gekennzeichnet, dass** die Steuereinheit (50) ausgebildet ist, in Abhängigkeit einer an dem Spannungswandler (4) anliegenden Last einzelne Subkomponenten (41) zu oder abzuschalten.

5. Bordnetz nach einem der vorhergehenden Ansprüche, **dadurch gekennzeichnet,**
(a) **dass** die Subkomponente (41) mindestens eine U/I-Messeinrichtung (45, 46) umfasst, um eine Spannung und/oder einen Strom der Subkomponente zu bestimmen; und/oder
(b) **dass** der Spannungswandler (4) mindestens eine U/I-Messeinrichtung (52, 53) umfasst, um eine Spannung und/oder Strom an einem Netzknoten des Spannungswandlers (4) zu dem ersten (2) und/oder dem zweiten (3) Teilnetz zu bestimmen.

6. Bordnetz nach einem der vorhergehenden Ansprüche, **dadurch gekennzeichnet, dass** mindestens eine der Subkomponenten (41) unidirektional ausgebildet ist.

7. Bordnetz nach einem der vorhergehenden Ansprüche, **dadurch gekennzeichnet, dass** das Bordnetz (1) ausgebildet ist, Energie aus dem ersten Energiespeicher (5) über den Spannungswandler (4) in den zweiten Energiespeicher (9) zu übertragen,
(a) wenn ein Ladezustand in dem zweiten Energiespeicher (9) einen vorbestimmten Schwellwert unterschreitet; und/oder
(b) wenn der erste Energiespeicher (5) nicht mehr in der Lage ist, ausreichend Leistung für den Start des Verbrennungsmotors zu liefern.

8. Bordnetz nach einem der vorhergehenden Ansprüche, **dadurch gekennzeichnet, dass** das Bordnetz (1; 21) ausgebildet ist
(a) in dem zweiten Energiespeicher (9) nicht aufnehmbare, rekuperierte Energie über den Spannungswandler (4) in das erste Teilnetz (2) zu übertragen; und/oder
(b) während des Fahrbetriebs im zweiten Speicher (9) gespeicherte Energie zur Versorgung des ersten Lastwiderstandes (6) an das ersten Teilnetz (2) zu übertragen.

9. Bordnetz nach einem der vorhergehenden Ansprüche, **dadurch gekennzeichnet, dass** das Bordnetz (1; 21) ausgebildet ist, mittels des Spannungswandlers (4) eine Ist-Spannung im ersten Teilnetz (2) auf eine vorgegebenen Kennlinie einzuregeln.

10. Bordnetz nach einem der vorhergehenden Ansprüche, **dadurch gekennzeichnet,**
(a) **dass** der Spannungswandler (4) ein DC/DC-Wandler ist; und/oder
(b) **dass** die Nennspannung U2 höher als die Nennspannung U1 ist.

11. Bordnetz nach einem der vorhergehenden Ansprüche, **dadurch gekennzeichnet**
(a) **dass** der zweite Energiespeicher (9) als ein Kondensatorspeicher oder ein Batteriespeicher ausgebildet ist; und/oder
(b) **dass** der erste Energiespeicher (5) als ein Bleiakkumulator, eine Lithium-Ionenakkumulator oder ein Kondensatorspeicher ausgebildet ist.

12. Fahrzeug, insbesondere Nutzfahrzeug, mit einem Bordnetz nach einem der vorstehenden Ansprüche.

## Claims

1. An on-board power supply system for a motor vehicle, in particular for a utility vehicle, having
a first subnetwork (2), in which a first nominal voltage (U1) is applied, comprising a first energy store (5) and a first load resistor (6) that is formed by a plurality of consumers;
a second subnetwork (3), in which a second nominal voltage (U2) is applied, comprising an electric machine (10) that is configured for starting an internal combustion engine of the motor vehicle and for generator operation and recuperation operation, a second energy store (9) that is connected to the electric machine (10) and is configured to store electric charge that is generated by the electric machine (10) in generator operation and recuperation operation; and
a voltage converter (4), which bidirectionally connects the first subnetwork (2) to the second subnetwork (3) and is connected at least indirectly to the first energy store (5) and the second energy store (9), wherein the voltage converter (4) is configured to transfer energy by means of the voltage converter (12) between the first (2) and second (3) subnetwork depending on a state of charge of the first energy store (5) and/or a state of charge of the second energy store (9);
wherein the voltage converter (4) comprises a control unit (50) and n subcomponents (41) that are connected in parallel and configured as voltage converters, wherein n ≥ 1; **characterized in that**
the subcomponents (41) each have a first switch (43) in order to isolate the subcomponent (41) from the first subnetwork (2) and/or have a second switch (44) in order to isolate the subcomponent (41) from the second subnetwork (3).

2. The on-board power supply system according to Claim 1, **characterized in that** the first subnetwork (2) or the second subnetwork (3) comprises a starter (7) for the internal combustion engine.

3. The on-board power supply system according to Claim 1 or 2, **characterized in that** the first subnetwork (2) has a sensor (8) for monitoring the state of charge of the first energy store (5).

4. The on-board power supply system according to one of the preceding claims, **characterized in that** the control unit (50) is configured to connect or disconnect individual subcomponents (41) depending on a load that is applied to the voltage converter (4).

5. The on-board power supply system according to one of the preceding claims, **characterized in that**
(a) the subcomponent (41) comprises at least one U/I measuring device (45, 46) in order to determine a voltage and/or a current of the subcomponent; and/or
(b) the voltage converter (4) comprises at least one U/I measuring device (52, 53) in order to determine a voltage and/or current at a network node of the voltage converter (4) to the first (2) and/or the second (3) subnetwork.

6. The on-board power supply system according to one of the preceding claims, **characterized in that** at least one of the subcomponents (41) is configured to be unidirectional.

7. The on-board power supply system according to one of the preceding claims, **characterized in that** the on-board power supply system (1) is configured to transfer energy from the first energy store (5) to the second energy store (9) by means of the voltage converter (4)
(a) when a state of charge in the second energy store (9) undershoots a predetermined threshold value; and/or
(b) when the first energy store (5) is no longer capable of delivering sufficient power for starting the internal combustion engine.

8. The on-board power supply system according to one of the preceding claims, **characterized in that** the on-board power supply system (1; 21) is configured
(a) to transfer recuperated energy that cannot be absorbed in the second energy store (9) to the first subnetwork (2) by means of the voltage converter (4); and/or
(b) to transfer energy that is stored in the second store (9) during the driving operation to the first subnetwork (2) for supplying power to the load resistor (6).

9. The on-board power supply system according to one of the preceding claims, **characterized in that** the on-board power supply system (1; 21) is configured to adjust an actual voltage in the first subnetwork (2) to a predefined characteristic curve by means of the voltage converter (4).

10. The on-board power supply system according to one of the preceding claims, **characterized in that**
(a) the voltage converter (4) is a DC-DC converter; and/or
(b) the nominal voltage U2 is higher than the nominal voltage U1.

11. The on-board power supply system according to one of the preceding claims, **characterized in that**
(a) the second energy store (9) is configured as a capacitor store or a battery store; and/or
(b) the first energy store (5) is configured as a lead-acid rechargeable battery, a lithium-ion rechargeable battery or a capacitor store.

12. A vehicle, in particular a utility vehicle, having an on-board power supply system according to one of the preceding claims.

## Revendications

1. Réseau de bord pour un véhicule automobile, notamment pour un véhicule utilitaire, comportant
un premier sous-réseau (2) dans lequel est appliquée une première tension nominale (U1), comprenant un premier accumulateur d'énergie (5) et une première résistance de charge (6) formée par plusieurs charges consommatrices ;
un second sous-réseau (3) dans lequel est appliquée une seconde tension nominale (U2), comprenant une machine électrique (10) qui est conçue pour démarrer un moteur à combustion interne du véhicule et est conçu pour un fonctionnement en mode de générateur ou en mode de récupération, un second accumulateur d'énergie (9) qui est relié à la machine électrique (10) et est conçu pour accumuler la charge électrique générée par la machine électrique (10) dans le mode de générateur ou le mode de récupération ; et
un convertisseur de tension (4) qui relie de manière bidirectionnelle le premier sous-réseau (2) au second sous-réseau (3) et est relié au moins de manière indirecte au premier accumulateur d'énergie (5) et au second accumulateur d'énergie (9), dans lequel le convertisseur de tension (4) est conçu pour transmettre de l'énergie par l'intermédiaire du convertisseur de tension (12) entre les premier (2) et second (3) sous-réseaux, en fonction d'un état de charge du premier accumulateur d'énergie (5) et/ou d'un état de charge du second accumulateur d'énergie (9) ;
dans lequel le convertisseur de tension (4) comprend une unité de commande (50) et n sous-composants (41) connectés en parallèle et réalisés sous la forme de convertisseurs de tension, dans lequel n≥1 ; **caractérisé en ce que**
les sous-composants (41) comportent respectivement un premier commutateur (43) destiné à séparer le sous-composant (41) du premier sous-réseau (2) et/ou un second commutateur (44) destiné à séparer le sous-composant (41) du second sous-réseau (3).

2. Réseau de bord selon la revendication 1, **caractérisé en ce que** le premier sous-réseau (2) ou le second sous-réseau (3) comprend un démarreur (7) destiné au moteur à combustion interne.

3. Réseau de bord selon la revendication 1 ou 2, **caractérisé en ce que** le premier sous-réseau (2) comporte un capteur (8) destiné à surveiller l'état de charge du premier accumulateur d'énergie (5).

4. Réseau de bord selon l'une quelconque des revendications précédentes, **caractérisé en ce que** l'unité de commande (50) est conçue pour activer ou désactiver des sous-composants individuels (41) en fonction d'une charge appliquée au convertisseur de tension (4).

5. Réseau de bord selon l'une quelconque des revendications précédentes, **caractérisé**
(a) **en ce que** le sous-composant (41) comprend au moins un dispositif de mesure U/I (45, 46) destiné à déterminer une tension et/ou un courant du sous-composant; et/ou
(b) **en ce que** le convertisseur de tension (4) comprend au moins un dispositif de mesure U/I (52, 53) destiné à déterminer une tension et/ou un courant au niveau d'un noeud de réseau du convertisseur de tension (4) sur le premier (2) et/ou le second (3) sous-réseau.

6. Réseau de bord selon l'une quelconque des revendications précédentes, **caractérisé en ce qu'**au moins l'un des sous-composants (41) est réalisé de manière unidirectionnelle.

7. Réseau de bord selon l'une quelconque des revendications précédentes, **caractérisé en ce que** le réseau de bord (1) est conçu pour transmettre l'énergie provenant du premier accumulateur d'énergie (5) au second accumulateur d'énergie (9) par l'intermédiaire du convertisseur de tension (4),
(a) lorsqu'un état de charge dans le second accumulateur d'énergie (9) s'abaisse en dessous d'un seul prédéterminé ; et/ou
(b) lorsque le premier accumulateur d'énergie (5) n'est plus en mesure de délivrer une puissance suffisante pour le démarrage du moteur à combustion interne.

8. Réseau de bord selon l'une quelconque des revendications précédentes, **caractérisé en ce que** le réseau de bord (1 ; 21) est conçu
(a) pour transmettre par l'intermédiaire du convertisseur d'énergie (4) au premier sous-réseau (2) l'énergie récupérée et ne pouvant pas être reçue dans l'accumulateur d'énergie (9) ; et/ou
(b) pour transmettre au premier sous-réseau (2) l'énergie accumulée dans le second accumulateur (9) pendant le mode de conduite aux fins de l'alimentation de la première résistance de charge (6).

9. Réseau de bord selon l'une quelconque des revendications précédentes, **caractérisé en ce que** le réseau de bord (1 ; 21) est conçu pour ajuster une tension réelle dans le premier sous-réseau (2) sur une courbe caractéristique prédéterminée au moyen du convertisseur de tension (4).

10. Réseau de bord selon l'une quelconque des revendications précédentes, **caractérisé**
(a) **en ce que** le convertisseur de tension (4) est un convertisseur continu/continu ; et/ou
(b) **en ce que** la tension nominale U2 est supérieure à la tension nominale U1.

11. Réseau de bord selon l'une quelconque des revendications précédentes, **caractérisé**
(a) **en ce que** le second accumulateur d'énergie (9) est réalisé sous la forme d'un accumulateur à condensateur ou d'un accumulateur à batterie ; et/ou
(b) **en ce que** le premier accumulateur d'énergie (5) est réalisé sous la forme d'un accumulateur au plomb, d'un accumulateur au lithium-ion ou d'un accumulateur à condensateur.

12. Véhicule, notamment véhicule utilitaire, comportant un réseau de bord selon l'une quelconque des revendications précédentes.
